# EUROPEAN PATENT APPLICATION

(11) **EP 3 588 315 A1**
(43) Date of publication of application: **01.01.2020**
(21) Application number: 17898029.8
(22) Date of filing: 29.12.2017
(51) Int. Cl.: G06F 13/00, G06F 12/00, G06F 21/31

(54) **SERVER DEVICE**

(30) Priority: 27.02.2017 JP 2017034979
(71) Applicant: Outabox Inc., Funabashi-shi, Chiba 273-0005 (JP)
(72) Inventor: WADA Takeshi, Funabashi-shi Chiba 273-0005 (JP)
(74) Representative: Herrero & Asociados, S.L.
(86) International application number: PCT/JP2017/047410
(87) International publication number: WO 2018/154976

(57) **Abstract**

The object of the present invention is to improve the security of files preserved on networks. A server device includes: a storing means for storing a plurality of web page files each corresponding to a plurality of matters to be reported, the plurality of web page files being associated with matter IDs and URL information; a receiving means for receiving, from a report originator terminal 300, web page file update information along with a matter ID for a particular matter to be reported; a web page file updating means for reading out a web page file for the particular matter to be reported from the storing means according to URL information associated with the received matter ID and updating the web page file according to the web page file update information; a URL updating means for issuing a new file name for the updated web page file and updating a URL for the web page file with the issuance of the new file name; a mail sending means for composing a reporting mail wherein the information about the updated URL is described in a body thereof and sending the composed reporting mail to a report receiver terminal 400.

## Description

### FIELD

An embodiment of the present invention relates to a server device.

### BACKGROUND

Currently, we can easily browse web pages on the Internet using a personal computer, smartphone, tablet terminal or the like whenever and wherever we want. Due to its easiness, web pages uploaded on the Internet are as diverse as a highly-public web page such as a news article page, a web page containing personal information, e.g., a credit card statement, etc. and the like. For a web page containing personal information, log-in information such as an ID, password or the like is set to restrict the viewers and a user can browse the web page by inputting his log-in information on the log-in screen. Recently, however, an ID and password have been issued in various scenes in our daily lives, so it is burdensome for a user to manage his log-in information. Besides, since the log-in information once issued is generally unchanged unless being changed on the user's part, if the log-in information is leaked to be known to a third party, the web page corresponding to the leaked log-in information will become continuously browsable.

### BRIEF DESCRIPTION OF THE INVENTION

The object of the present invention is to improve the security of files preserved on networks.

A server device according to an embodiment of the present invention is connected with a report originator terminal on a report originator's part and a report receiver terminal on a report receiver's part via a network, the server device comprising: a storing means for storing a plurality of web page files each corresponding to a plurality of matters to be reported, the plurality of web page files being associated with a plurality of matter IDs each identifying the plurality of matters to be reported and with URL information about the plurality of web page files; a receiving means for receiving, from the report originator terminal, web page file update information along with a matter ID for a particular matter to be reported; an updating means for reading out a web page file for the particular matter to be reported from the storing means according to URL information associated with the received matter ID and updating the web page file according to the web page file update information; a URL updating means for issuing a new file name for the updated web page file and updating a URL for the web page file with the issuance of the new file name; and a mail sending means for composing a reporting mail wherein the information about the updated URL is described in a body thereof and sending the composed reporting mail to the report receiver terminal.

### BRIEF DESCRIPTION OF THE DRAWINGS

Fig. 1 is a system configuration diagram illustrating an example of a report notification system including server devices according to the present embodiment;
Fig. 2 is a sequence diagram illustrating an example of a procedure of a report notification process with the report notification system of Fig. 1;
Fig. 3 shows an example of the log-in screen in Fig. 2;
Fig. 4 shows an example of the matter list screen in Fig. 2;
Fig. 5 shows an example of the posting screen exclusive to the matter in Fig. 2;
Fig. 6 shows an example of the posting acceptance screen in Fig. 2;
Fig. 7 shows an example of the mail receipt screen in Fig. 2;
Fig. 8 shows an example of the updated web page in Fig. 2;
Fig .9 shows another example of the mail receipt screen in Fig. 2;
Fig. 10 shows an example of a web page corresponding to an updated URL;
Fig. 11 shows an example of a web page corresponding to a URL issued in the past;
Fig. 12 shows an example of a log-in management table stored in the web server device in Fig. 1;
Fig. 13 shows an example of a web page file management table stored in the web server device in Fig. 1;
Fig. 14 shows an example of a contact address management table stored in the mail server device in Fig. 1;
Fig. 15 is a sequence diagram illustrating another example of the procedure of the file name issuance process in Fig. 2;
Fig. 16 is a sequence diagram illustrating another example of the procedure of the file name issuance process in Fig. 2;
Fig. 17 is a sequence diagram illustrating an example of the procedure wherein the file name issuance process in Fig. 2 is performed at the mail server device;
Fig. 18 is a sequence diagram illustrating an example of the procedure wherein the file name issuance process in Fig. 2 is performed at the tablet terminal;
Fig. 19 is a sequence diagram illustrating another example of the procedure wherein the file name issuance process in Fig. 2 is performed at the tablet terminal;
Fig. 20 is a sequence diagram illustrating another example of the procedure wherein the file name issuance process in Fig. 2 is performed at the tablet terminal;
Fig. 21 is a sequence diagram illustrating an example of the procedure wherein the web page file update information in Fig. 2 is sent via mail;
Fig. 22 is a sequence diagram illustrating an example of the procedure wherein the web page file update information in Fig. 2 is input via mail;
Fig. 23 is a system configuration diagram illustrating another example of the report notification system including the server devices according to the present embodiment;
Fig. 24 is a sequence diagram illustrating an example of the procedure of the report notification process with the report notification system in Fig. 23;
Fig. 25 shows an example of an application page management table stored in an application server device in Fig. 23;
Fig. 26 is a sequence diagram illustrating an example of the procedure of the automatic registration process of an application ID with the report notification system in Fig. 23;
Fig. 27 shows an example of a web page displayed on a smartphone in the automatic registration process of an application ID in Fig. 26;
Fig. 28 is a system configuration diagram illustrating another example of the report notification system including the server devices according to the present embodiment; and
Fig. 29 is a sequence diagram illustrating an example of the procedure of the report notification process with the report notification system in Fig. 28.

### DETAILED DESCRIPTION OF THE INVENTION

A user can browse, by inputting a URL to a browser, a web page corresponding to the input URL. A URL is a symbol string for identifying a web page file on a network and determined automatically according to a server device name of a server device where the web page file is stored, a domain name, a folder name and a file name of the web page file, etc. A server device according to the present embodiment is characterized in that it stores a plurality of web page files, wherein each time the web page files are updated, URLs for the updated web pages are also updated. In these web page files, in order not to be searched for by the search engine, a tag which states that the web page files shall not be registered in the search result of the search engine, for example, is described. Besides, links to external web sites are not set in the web page files. Accordingly, a particular web page file stored in the server device according to the present embodiment is not searched for by the search engine, so the particular web page can be browsed only by a person who is notified its URL. Even if the URL for the particular web page should be leaked, the URL is updated if the particular web page is updated, so pre-update and post-update particular web pages cannot be browsed with the leaked URL. This can prevent the web page file preserved on the Internet to be browsed by a large number of unspecified people and limit the damage even if the URL should be leaked. The server device according to the present embodiment is effective, especially when the device is used with a system which offers a service that a web page is updated frequently.

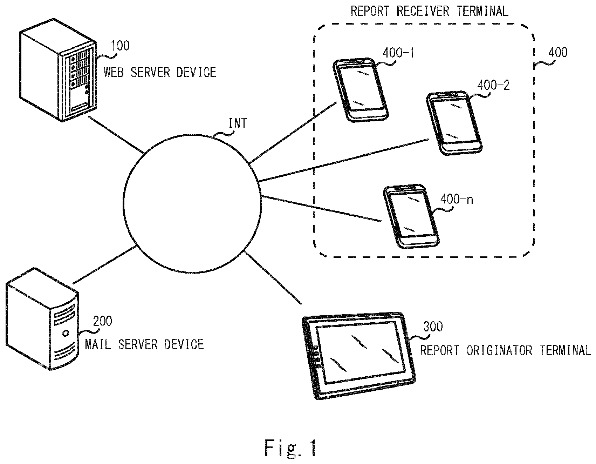

A report notification system including server devices according to the present embodiment will be described below referring to the accompanying drawings. Fig. 1 is a configuration diagram illustrating an example of the report notification system including the server devices according to the present embodiment. The server device according to the present embodiment stores a plurality of web page files each corresponding to a plurality of matters to be reported. The term "matter to be reported" refers to a case on which the report originator is, for example, under contract to periodically report to the report receiver. The term "web page" refers to a page for the exclusive use of the report receiver to browse the contents of the report input by the report originator. For example, if the matter to be reported is a follow-up of an inpatient A, the report originator is a nurse in charge of the patient A while the report receiver is the family of the patient A. The nurse, the report originator, e.g., by using a tablet terminal, inputs web page update information (files such as a text, an image and the like) about the follow-up state of the patient A on mail software or on a posting screen for the exclusive use and sends it to the server device. The server device updates, according to the web page update information, a web page file corresponding to the matter to be reported for the patient A as well as a URL of the updated web page file and sends the updated URL information to the family, i.e., the report receiver.

The server devices according to the present embodiment are connected with a report originator terminal 300 and a report receiver terminal 400 via a network, which is typically the Internet (INT). The server devices according to the present embodiment have the data accumulation function of accumulating data for a plurality of web page files each corresponding to a plurality of matters to be reported, the receiving function of receiving web page file update information about a particular matter to be reported from the report originator terminal, the web page update function of updating the web page file corresponding to the particular matter to be reported according to the web page file update information, the file name issuance function of issuing a new file name for the updated web page file, the URL update function of updating a URL for the updated web page according to the issued file name, the mail composing function of composing a reporting mail wherein the updated URL information is described in the body thereof and the updated URL sending function of sending the updated URL information to the report receiver terminal 400.

These functions may be implemented in a distributed manner on a plurality of server devices which are physically separated from each other or may be implemented on a single server device. Likewise, it may be configured such that an external device has some of the functions and the server devices according to the present embodiment control the external device having some of the functions. In the present embodiment, for convenience of explanation, these functions of the server are described as being implemented on a web server device 100 and a mail server device 200 in a distributed manner. The web server device 100 has the data accumulation function, the receiving function, the web page update function, the file name issuance function and the URL update function. The mail server device 200 has the mail composing function and the mail sending function.

The report originator terminal and the report receiver terminal are information devices such as a smartphone, PHS, PDA, tablet terminal and the like which are connected with the Internet (INT) via a base station. In the present embodiment, the report originator terminal is a tablet terminal 300 and the report receiver terminals are smartphones 400 (400-1, 400-2, ..., 400-n).

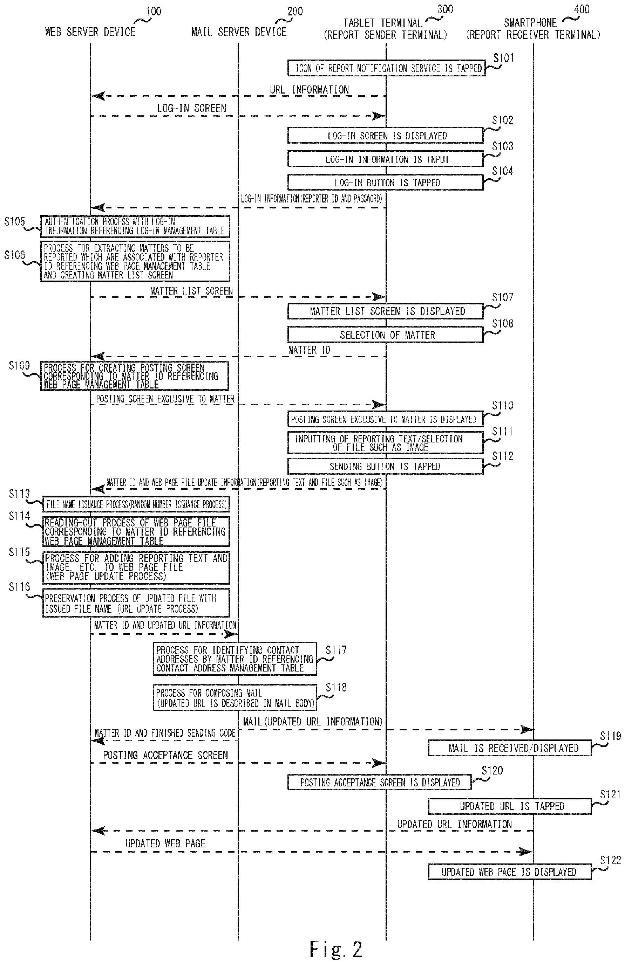

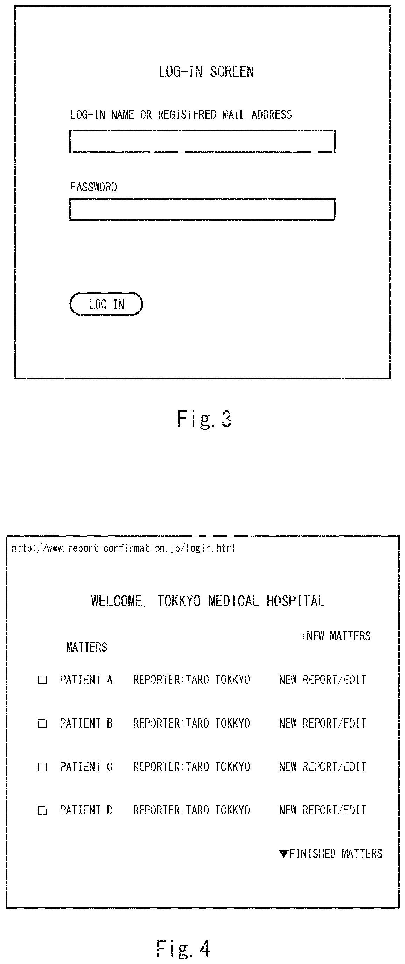

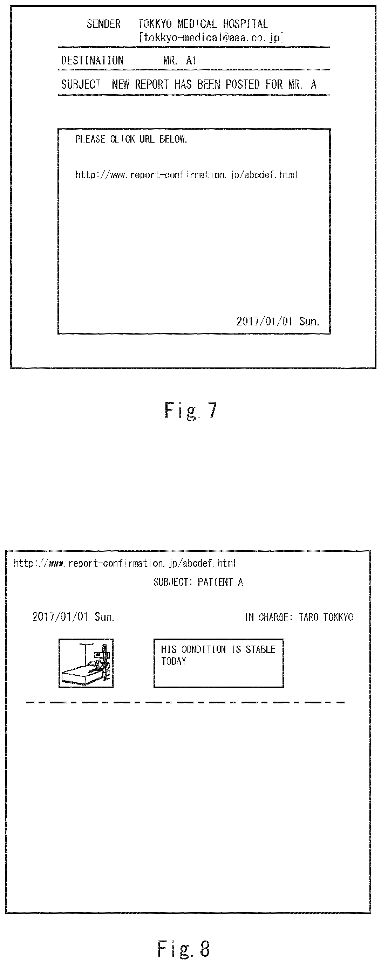

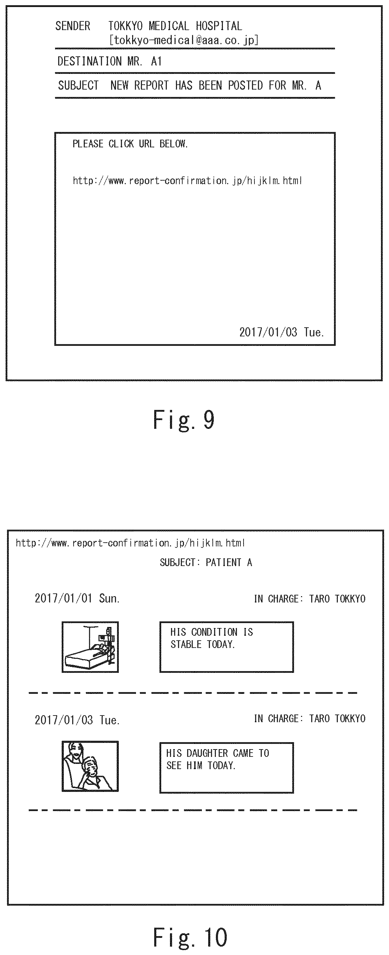

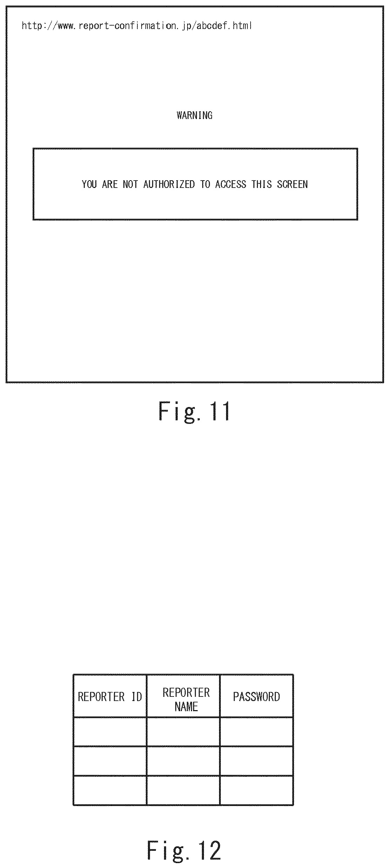

Fig. 2 illustrates a procedure of a report notification process with the report notification system according to the present embodiment. Fig. 3, Fig. 4, Fig. 5 and Fig. 6 illustrate examples of a log-in screen, a matter list screen, a posting screen exclusive to a matter and a posting acceptance screen, respectively, which are all displayed in the tablet terminal 300. Fig. 7 and Fig. 8 illustrate examples of a mail receipt screen and a web page exclusive to a matter, respectively, which are both displayed in the smartphones 400. Fig. 9, Fig. 10 and Fig. 11 illustrate examples of a mail receipt screen, the web page exclusive to a matter which appears when the latest URL is tapped and a warning screen which appears when a URL issued in the past is tapped, respectively, which are all displayed in the smartphones 400. Fig. 12, Fig. 13 and Fig. 14 illustrate an example of a log-in management table stored in the web server device 100, an example of a web page management table stored in the web server device 100 and an example of a contact address management table stored in the mail server device 200, respectively.

In the log-in management table, authentication items such as a reporter name and a password are associated with a reporter ID. In the web page management table, URL information for a plurality of web page files is associated with a plurality of matter IDs each identifying a plurality of matters to be reported. Each time a web page file is updated, the URL thereof is also updated even if the web page file is for the same matter. And so, the URL information includes the latest URL information and the past URL information. Besides, items such as the reporter ID, the reporter name, a matter name and a matter status indicating the state of the matter (whether the matter has been finished or not) are associated with the matter ID. In the contact address management table, items necessary for composing a reporting mail, e.g., the matter name, the reporter name, a report destination (TO) and a report destination (CC) are associated with the matter ID. It should be noted that these items associated with the matter ID may be managed in a centralized manner in the web server device 100 or may be managed in a distributed manner in a plurality of devices as is the case for the present embodiment.

A procedure of a report notification process will be described below referring to Fig. 2.

A log-in ID (reporter ID) and a password have been issued for a report originator who utilizes a report notification service offered by the server devices according to the present embodiment. When an icon corresponding to the report notification service and displayed in a browser of a tablet terminal 300 is tapped by the report originator (S101), URL information for a log-in screen of the report notification service associated with the icon is sent from the tablet terminal 300 to the web server device 100. The web server device 100 reads out data (HTML data) for the log-in screen corresponding to the received URL information from a storage device (database) and sends the data to the tablet terminal 300. Accordingly, the log-in screen illustrated in Fig. 3 is displayed in the tablet terminal 300 (S102).

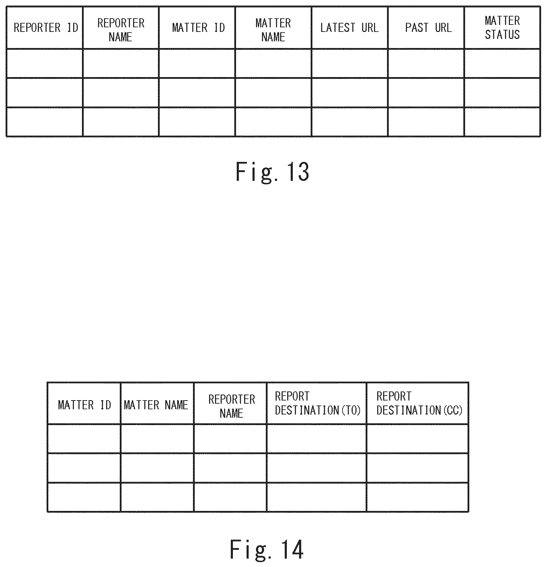

The reporter ID and the password are input through the report originator's manipulation on the log-in screen illustrated in Fig. 3 (S103). When a log-in button is tapped by the report originator (S104), the log-in information (reporter ID and password) is sent from the tablet terminal 300 to the web server device 100. The web server device 100, referencing the log-in management table illustrated in Fig. 12, performs an authentication process with the received log-in information (S105). After the authentication is verified, the web server device 100, referencing the web page management table illustrated in Fig. 13, extracts matter names corresponding to the received log-in ID and generates data for a matter list screen on which the extracted matter names are listed (S106). The data generated for the matter list screen is sent from the web server device 100 to the tablet terminal 300. Accordingly, the matter list screen illustrated in Fig. 4 is displayed in the tablet terminal 300 (S107).

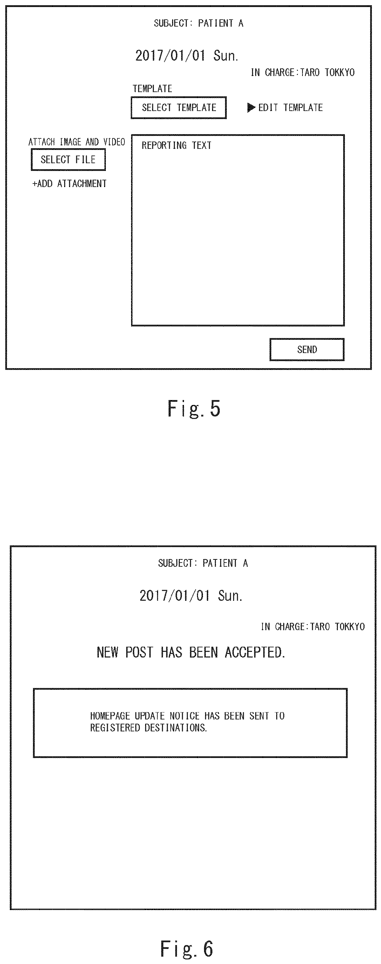

When a particular matter to be reported is selected through the report originator's manipulation on the matter list screen illustrated in Fig. 4 (S108), a matter ID corresponding to the selected particular matter to be reported is sent from the tablet terminal 300 to the web server device 100. The web server device 100, referencing the web page management table, inserts a matter name and a reporter name corresponding to the received matter ID into a template of a posting screen to generate data for the posting screen exclusive to the matter (S109) . The generated data for the posting screen is sent from the web server device 100 to the tablet terminal 300. Accordingly, the posting screen illustrated in Fig. 5 is displayed in the tablet terminal 300 (S110).

A reporting text is input and a file such as an image is selected through the report originator's manipulation on the posting screen illustrated in Fig. 5 (Sill). When a sending button is tapped by the report originator (S112), the web page file update information (the reporting text and the file such as an image) is sent from the tablet terminal 300 to the web server device 100 along with the matter ID. The web server device 100, upon receipt of the web page file update information, issues a new file name for the updated web page file (S113) . Specifically, the web server device 100 generates, for example, an irregular and non-reproducible string (random number) as the new file name upon receipt of the web page file update information.

The web server device 100, referencing the web page management table illustrated in Fig. 13, identifies a URL for the web page file corresponding to the received matter ID and reads out the web page file for the particular matter to be reported from the database according to the identified URL information (S114). The web server device 100 updates the read-out web page file according to the web page file update information (S115). Specifically, the web server device 100 inserts the received reporting text and image, etc. into the read-out web page file according to a predetermined format and overwrites the file. The web server device 100 preserves, in the database, the updated web page file with the file name which is issued in the file name issuance process in Step S113 (S116) . Accordingly, the URL for the updated web page file is updated. In the post-update URL, the file name in the pre-update URL is changed. While the updated URL information is written into the web page management table as the latest URL information, the pre-update URL information is written as the past URL information. The new URL information for the updated web page is sent from the web server device 100 to the mail server device 200 along with the matter ID.

The mail server device 200, referencing the contact address management table illustrated in Fig. 14, identifies contact addresses (destination and broadcast mail addresses) corresponding to the received matter ID (S117) and composes a reporting mail by inserting the received URL information into a template of a mail body (S118) . The mail server device 200 sends the composed reporting mail to the mail addresses identified in Step S117. Accordingly, a mail receipt screen illustrated in Fig. 7 is displayed on the smartphones 400 which have received the reporting mail (S119). Further, the mail server device 200 sends, along with the matter ID, to the web server device 100, a finished-sending code indicating that the reporting mail has been sent. The web server device 100 sends a posting acceptance screen to the reporter ID (report originator terminal 300) corresponding to the matter ID according to the receipt of the finished-sending code. Accordingly, the posting acceptance screen illustrated in Fig. 6 is displayed on the tablet terminal 300 on a report originator's part (S120). The report originator can check whether the page file for the selected matter to be reported has been updated and notified to a report receiver's part by viewing the posting acceptance screen shown in Fig. 6. When the updated URL on the mail receipt screen shown in Fig. 7 is tapped by the report receiver (S121), the updated URL information is sent from the smartphone 400 to the web server device 100. The web server device 100 reads out a web page file corresponding to the updated URL from the database and send it to the smartphone 400. Accordingly, the updated web page shown in Fig. 8 is displayed on the smartphone 400 (S122).

In the report notification system, if the mail receipt screen shown in Fig. 7 were leaked to a third party, for example, the web page shown in Fig. 8 corresponding to the particular matter to be reported could be browsed by the third party. The web server device 100, however, also updates a URL for the updated web page according to the web page update. Therefore, once the web page corresponding to the leaked-out URL has been updated, the URL for the updated web page is also updated so that the web page corresponding to the leaked URL will no longer exist on the server device. Accordingly, even if the past URL shown in Fig. 7 is leaked, once the web page is updated, the third party can browse neither the post-update web page shown in Fig. 10 nor yet the pre-update web page shown in Fig. 8 which could be browsed at the time of leakage. It should be noted that when the past URL is tapped, a warning screen shown in Fig. 11 is displayed on that tapped terminal display.

Thus, with the server device according to the present embodiment, the web page corresponding to the matter to be reported which is preserved on the database does not appear on a search result of a search engine. Further, it is only a report receiver who has been registered in advance that can know a URL for the web page corresponding to the matter to be reported which is preserved on the database. Therefore, inputting of the ID or password for limiting browse of the web page corresponding to the matter to be reported may not be required. Since the report receiver have only to tap the notified URL in order to browse the updated web page, burdensome tasks of inputting and managing the ID or password can be eliminated. Even if the URL corresponding to the web page for the particular matter to be reported should be leaked out to be known to a third party, once the web page corresponding to the URL is updated, the URL for the updated web page is also updated so that the third party cannot browse the post-update and pre-update web pages using the URL that he has known. Therefore, with the server device according to the present embodiment, it is difficult for the third party to keep browsing the update information for the web page, so the damage of personal information leakage due to the leaked URL can be suppressed.

It should be noted that although the file name for the web page file is changed in order to update the URL for the updated web page file in the present embodiment, where to be changed in the URL is not limited to the file name as long as the updated URL cannot be predicted or estimated by the third party. For example, the URL for the updated web page file may be updated by changing the name of a folder in which the updated web page file is preserved or the name of a server on which the updated web page file is preserved. That is to say, you have only to update the URL for the updated web page file to a URL including a newly-issued string (random number) .

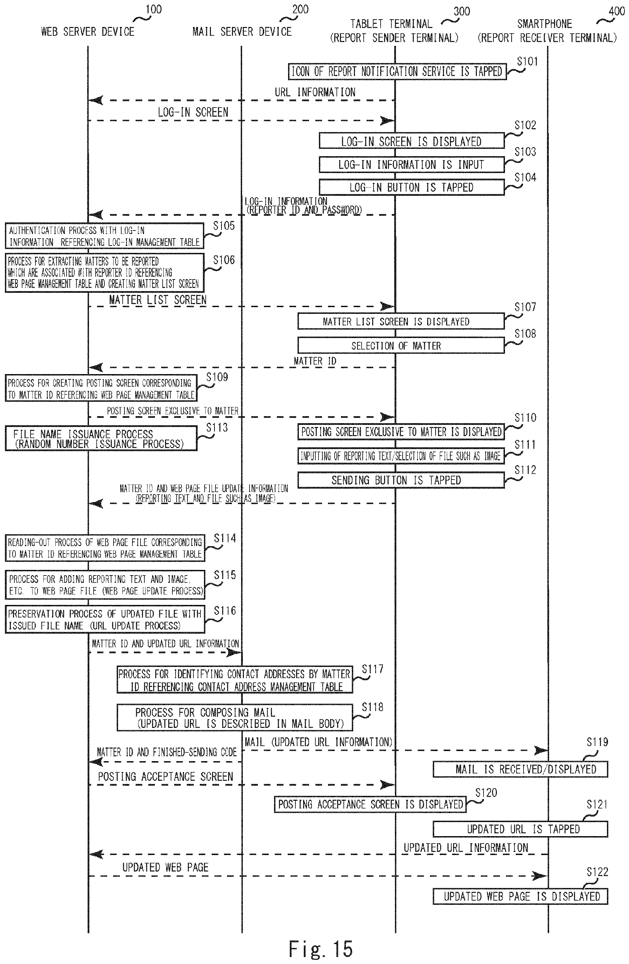

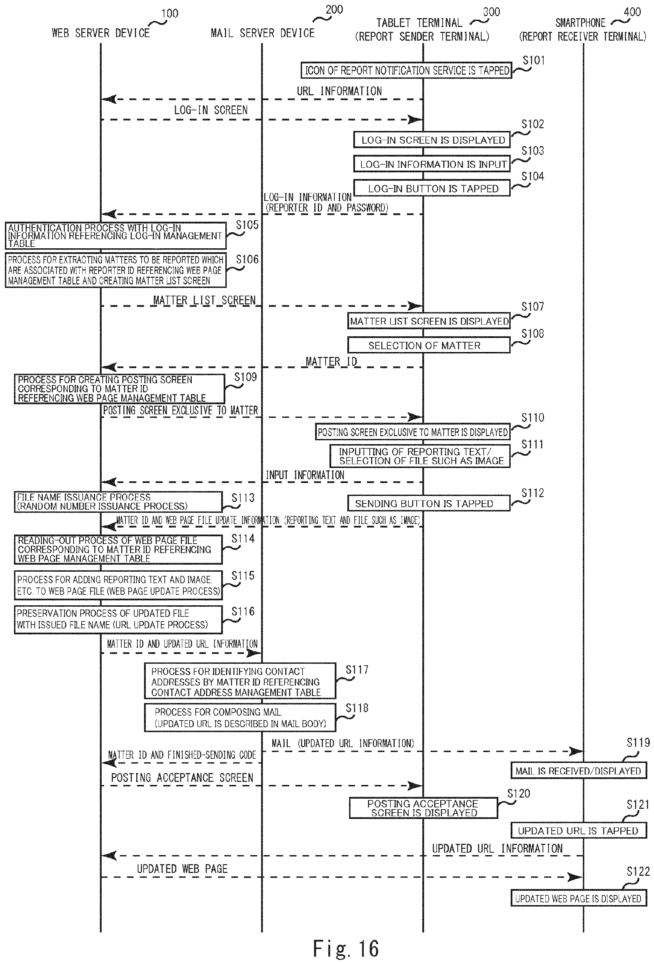

Further, the timing of the file name issuance process performed by the web server device 100 as described in the step S113 of the report notification process is not limited to the above. For example, as shown in Fig. 15, the file name issuance process may be performed by the web server device 100 upon sending the posting screen exclusive to the matter from the web server device 100 to the tablet terminal 300. Likewise, as shown in Fig. 16, the file name issuance process may be performed by the web server device 100 upon the report originator inputting the updated information for the web page file, i.e., upon receipt of the information input on the posting screen from the tablet terminal 300. Likewise, the file name may be prepared in advance instead of being issued upon any process in the report notification process. For example, a file name update list on which a plurality of file names are listed has been preserved in advance on the web server device 100 and a file name selected from the list may be a new file name. Likewise, the web server device 100 may retain at least one new file name and update the new file name if it has not been used for a preset elapsed time.

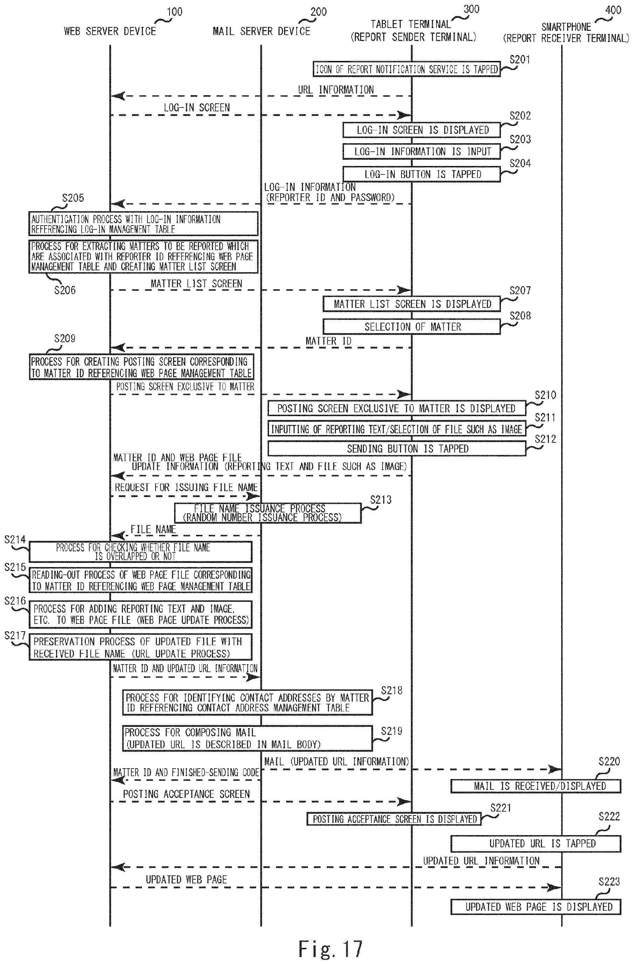

Likewise, the mail server device 200 may have the file name issuance function instead of the web server device 300. Fig. 17 shows a flow of the report notification process in which the file name issuance process is performed in the mail server device 200. As shown in Fig. 17, the file name issuance process is performed by the mail server device 200 once the mail server device 200 has received a request for issuing a file name from the web server device 100. Specifically, for example, the web server device 100 sends the request for issuing a file name to the mail server device 200 upon receipt of the web page file update information from the tablet terminal 300. The mail server device 200 performs the file name issuance process upon receipt of the request for issuing a file name (S213) and issues a file name for updating the web page file. The issued file name is sent from the mail server device 200 to the web server device 100. The web server device 100 checks the received file name against the file names issued in the past which are included in the URL information of the web page management table (S214). Consequently, when the received file name is not overlapped with any of the file names issued in the past, the updated web page file with the received file name is preserved. It should be noted that when the received file name is overlapped with any of the file names issued in the past, the web server device 100 resend the request for issuing a file name to the mail server device 200.

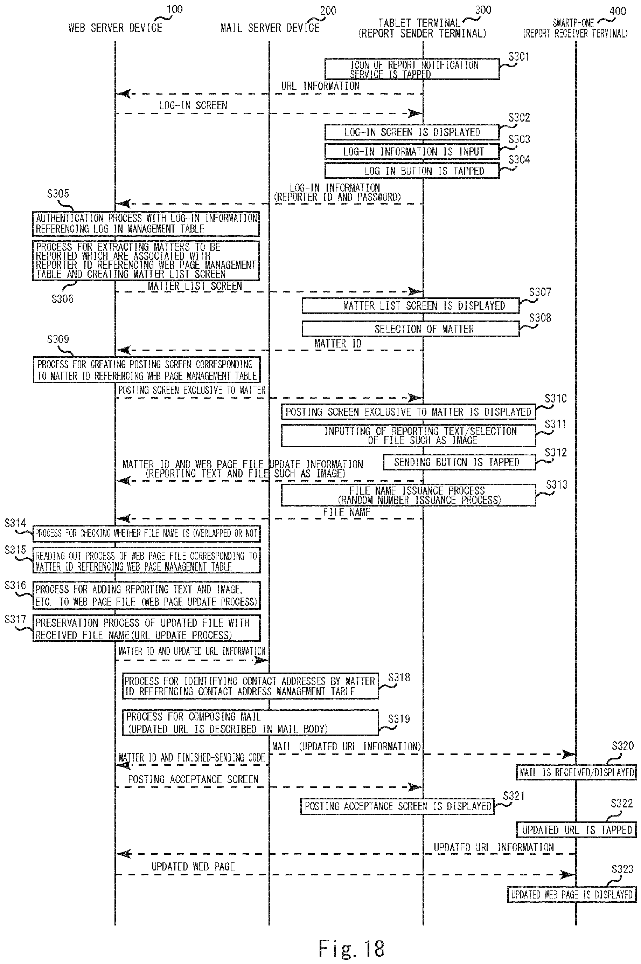

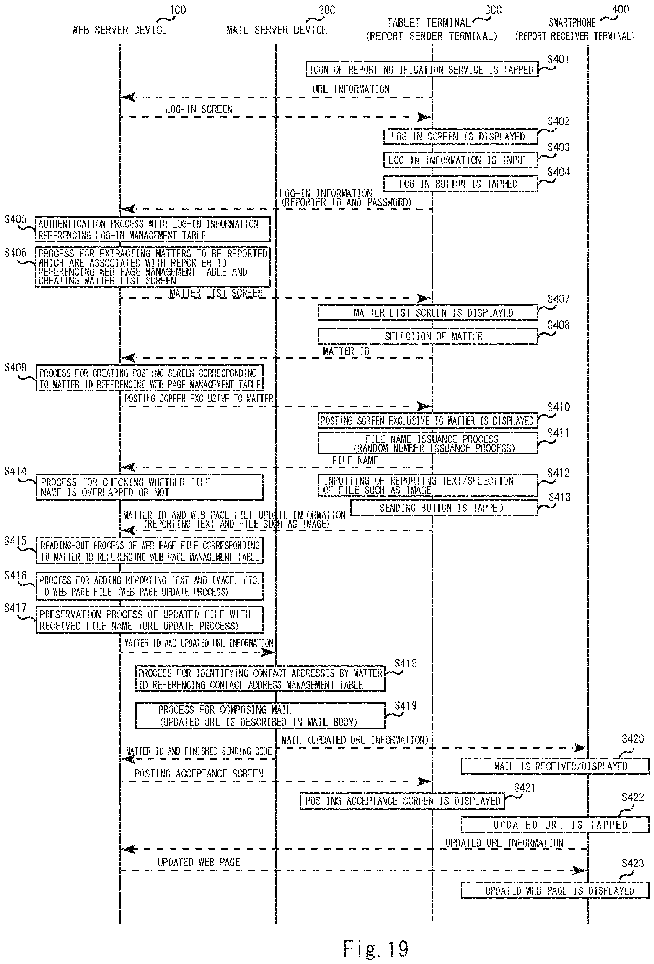

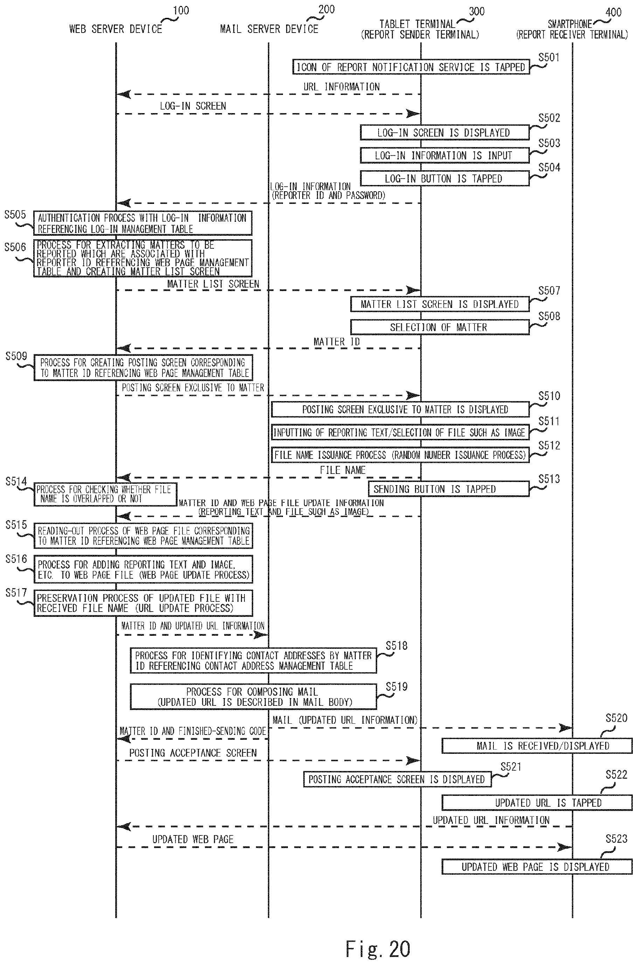

Likewise, the report originator terminal (tablet terminal) 300 may have the file name issuance function. Fig. 18, Fig. 19 and Fig. 20 show procedures of the report notification process in which the file name issuance process is performed in the report originator terminal. The timings when the file name issuance processes are performed in the tablet terminal 300 are different in the report notification processes shown in Fig. 18, Fig. 19 and Fig. 20. In one example as shown in Fig. 18, the file name issuance process is performed when the sending button is tapped by the report originator. In another example as shown in Fig. 19, the file name issuance process is performed when the posting screen is displayed. In yet another example as shown in Fig. 20, the file name issuance process is performed when manual manipulation on the posting screen is performed.

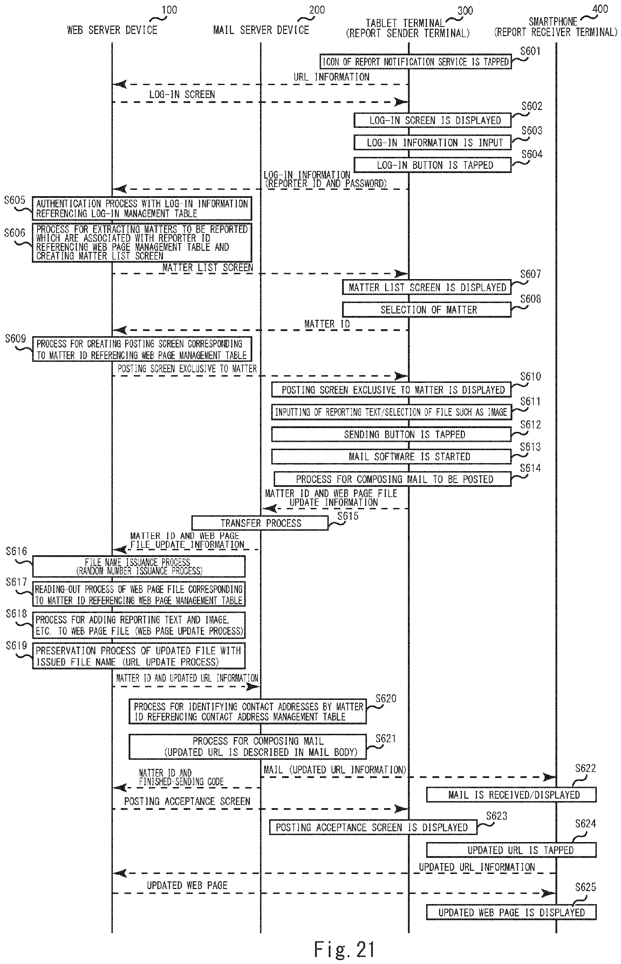

Further, although the update information for the web page file has been described as being sent to the web server device 100 via the web browser of the tablet terminal 300, it may be sent to the web server device 100 via mail software of the tablet terminal 300. Fig. 21 shows a flow of the report notification process wherein the update information for the web page file is sent via the mail software. As shown in Fig. 21, the report originator inputs a reporting text/selects a file such as an image or the like on the posting screen exclusive to a matter displayed on the browser (S611). When the sending button is tapped by the report originator (S612), then the mail software installed on the tablet terminal 300 is started (S613), the process for composing and sending a mail to be posted being performed (S614) and the mail to be posted being sent from the tablet terminal 300 to the mail server device 200 along with the matter ID. In the process for composing a mail to be posted, the reporting text input on the posting screen in the step S611 is inserted into the mail body, the file such as an image or the like selected on the posting screen in the step S611 being attached to the mail and a destination mail address exclusive to the matter being inserted into a destination. The mail server device 200 performs a process for transferring the received mail to be posted to the web server device 100 (S615).

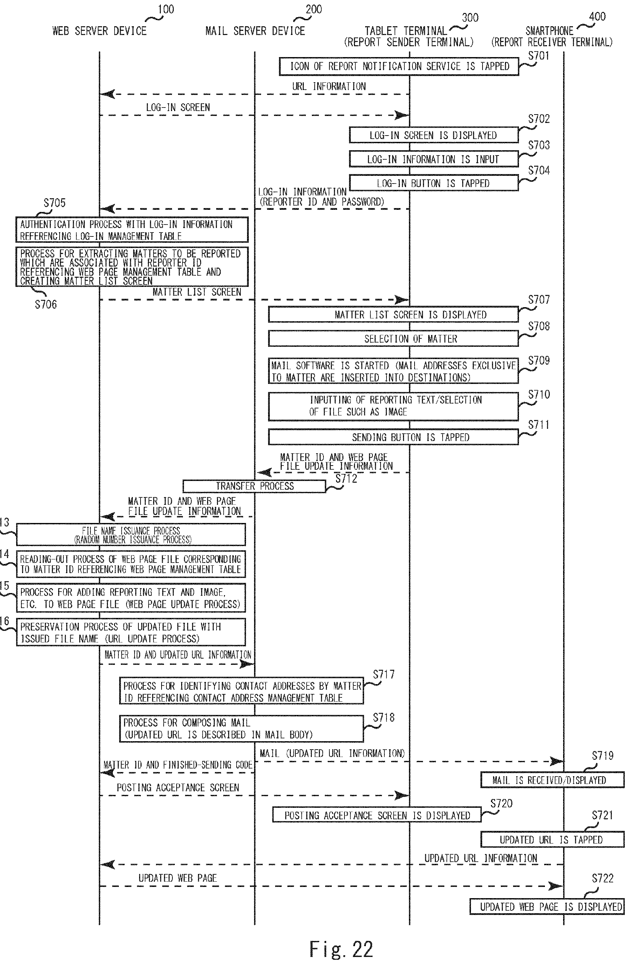

Further, although the update information for the web page file has been described as being input on the posting screen exclusive to the matter displayed on the web browser of the tablet terminal 300, it may be input on a mail sending screen of the mail software. Fig. 22 shows an example of a flow of the report notification process wherein the update information for the web page file (reporting text/file such as an image) is input on the mail software. As shown in Fig. 22, when a particular matter to be reported is selected from a matter list screen by the report originator (S708), the mail software is started (S709) to display the mail sending screen. In the mail sending screen, the destination mail address exclusive to the matter is inserted into a destination. On the mail sending screen, the report originator inputs a reporting text to the mail body and selects an image or the like as an attached file (S710). When the sending button is tapped by the report originator (S711), the mail to be posted is sent from the tablet terminal 300 to the mail server device 200 along with the matter ID. The mail server device 200 performs a process for transferring the received mail to be posted to the web server device 100 (S712).

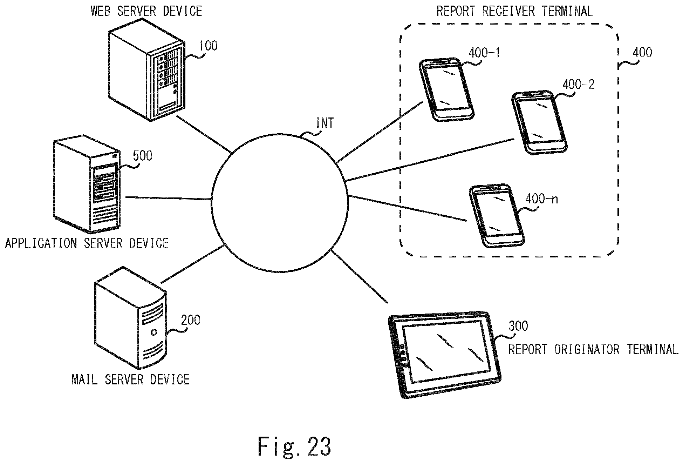

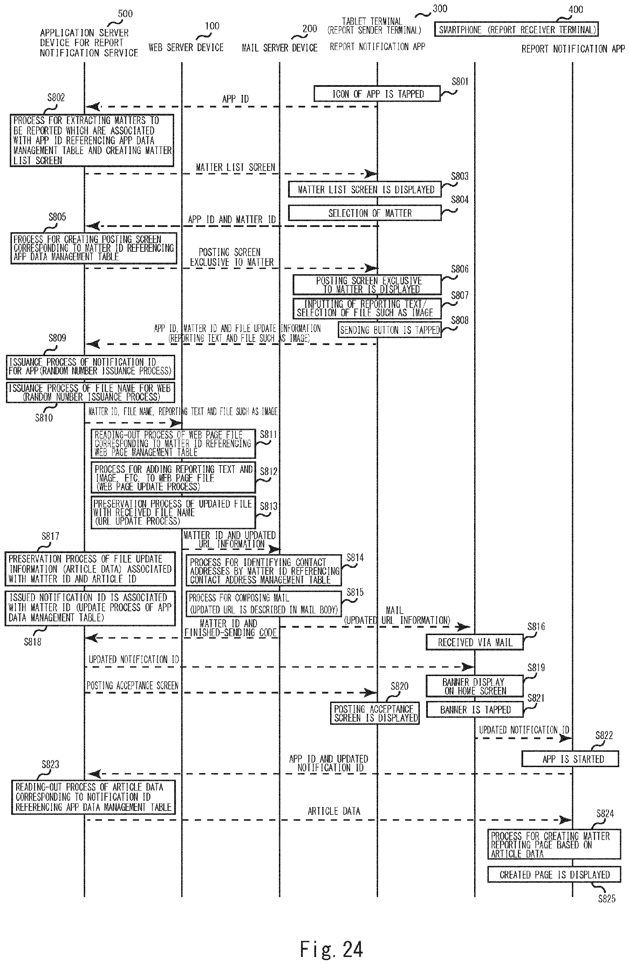

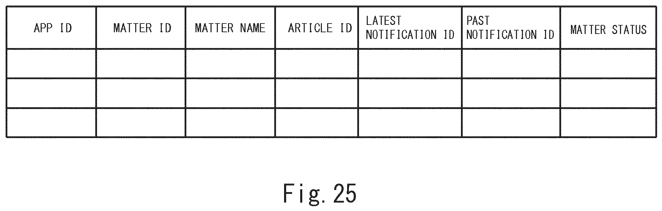

Further, the report notification system may be configured such that the posing of the update information by the report originator and the browsing of the page for the matter to be reported by the report receiver can be performed via application software exclusive to the report notification service (referred to as a "report notification app" hereinafter). Fig. 23 is a system configuration diagram illustrating another example of the report notification system including the server devices according to the present embodiment. Fig. 24 is a sequence diagram illustrating an example of a procedure of the report notification process with the report notification system in Fig. 23. Fig. 25 shows an example of an app data management table managed by the application server device 500 in Fig. 23.

The report notification system shown in Fig. 23 has a configuration in which the function of the server device according to the present embodiment is implemented in a distributed manner in the three server devices (web server device 100, mail server device 200 and application server device 500). The application server device 500 stores an article data set constituting a plurality of page files for the report notification app (referred to as "app page files" hereinafter) each corresponding to a plurality of matters to be reported. In the app data management table, the article data set is associated with a matter ID. In the report notification system shown in Fig. 23, the data for the matters to be reported is managed in the application server device 500 and the web server device 100. The matter ID is an ID for identifying a matter to be reported and the matter to be reported can be identified from the application server device 500 and the web server device 100 using the matter ID. In the application server device 500, an app ID for identifying a terminal (report originator), a matter name, a matter data name and a matter status are associated with the matter ID. The article data set is composed of a plurality of pieces of article data. The article data is data per post posted by the report originator, e.g., image data, text data and the like. The article data is associated with an article ID to be stored. Notification IDs (the latest notification ID and the past notification ID) are associated with the article ID. The notification ID is an ID for identifying article data associated with a matter to be reported on the server and is typically different from one matter to be reported to another. In the report notification system shown in Fig. 23, the notification ID is notified to a report receiver's part. The report receiver can browse, on the report notification app, a page for a particular matter to be reported corresponding to the notification ID by tapping the notification ID on the report notification app. In the report notification system shown in Fig. 23, the notification ID is updated each time a post for the particular matter to be reported is made.

The web server device 100 stores a plurality of web page files each corresponding to a plurality of matters to be reported and the web page management table shown in Fig. 13. The mail server device 200 stores the contact address management table shown in Fig. 14. In the tablet terminal 300 and smartphone 400, the report notification app is installed.

When the app icon for the report notification app displayed on the screen of the tablet terminal 300 is tapped by the report originator (S801), a unique app ID associated with the app icon is sent from the tablet terminal 300 to the application server device 500. The application server device 500, referencing the app data management table, extracts matters to be reported associated with the received app ID and generates data for a matter list screen on which the extracted matters to be reported are listed (S802). The generated data for the matter list screen is sent from the application server device 500 to the tablet terminal 300. Accordingly, the matter list is displayed on the screen of the report notification app of the tablet terminal 300 (S803).

When a particular matter to be reported is selected through the report originator's manipulation on the matter list screen (S804), a matter ID corresponding to the selected particular matter to be reported is sent from the tablet terminal 300 to the application server device 500 along with the app ID. The application server device 500 generates, referencing the app data management table, data for the posting screen on which a matter name and a reporter name corresponding to the received matter ID are described (S805). The data generated for the posting screen is sent from the application server device 500 to the tablet terminal 300. Accordingly, the posting screen is displayed on the screen of the report notification app of the tablet terminal 300 (S806).

A reporting text is input and a file such as an image is selected through the report originator's manipulation on the posting screen (S807). When the sending button is tapped by the report originator(S808), file update information (article data such as the reporting text, the file such as an image and the like) is sent along with the app ID and matter ID from the tablet terminal 300 to the application server device 500. Upon this, the application server device 500 issues a new notification ID corresponding to the matter ID for the received particular matter to be reported and a new file name for the web page file updated at the web server device 100 (S809 and S810). The issued new file name is sent from the application server device 500 to the web server device 100 along with the matter ID and the file update information. The web server device 100, referencing the web page management table, identifies a URL for the web page file corresponding to the received matter ID and reads out the web page file for the particular matter to be reported from the database according to the identified URL information (S811). The web server device 100 updates the read-out web page file according to the file update information (S812) and preserves the updated web page file with the received new file name on the database (S813). Accordingly, the URL for the updated web page file is updated. The updated URL information is written into the web page management table and the URL information before update is accumulated in the past URL information. The updated new URL information is sent from the web server device 100 to the mail server device 200 along with the matter ID.

The mail server device 200, referencing the contact address management table, identifies contact addresses (destination and broadcast mail addresses) corresponding to the received matter ID (S814) and composes a reporting mail wherein the received URL information is described in the mail body thereof (S815) . The composed reporting mail is sent to the mail addresses identified in the step S814. The report receiver receives the reporting mail on the mail software of the tablet terminal 300 (S816) . The mail server device 200 sends, to the application server device 500, along with the matter ID, the finished-sending code indicating that the reporting mail has been sent.

On the other hand, the application server device 500 issues an article ID for the received file update information (article data) and associates the issued article ID with the received matter ID and stores the article ID (S817) . Accordingly, the posted article data and the article data posted in the past are associated with the matter ID for the particular matter to be reported. The application server device 500 stores the matter ID for the particular matter to be reported associated with the new notification ID issued in the step S809 (S818). The new notification ID is written into a column for the latest notification ID corresponding to the matter ID for the particular matter to be reported in the app data management table. It should be noted that a data name for the article data may be the same as the notification ID issued in the step S809 or may be updated to a file name (random number) issued separately. The updated notification ID is sent from the application server device 500 to the smartphone 400. In this case, push notification is typically utilized for sending the updated notification ID. Accordingly, a banner notifying that a post is made for the particular matter to be reported is displayed on the home screen of the smartphone 400 (S819). In this banner, the notification ID is set to be linked.

The application server device 500 sends the updated notification ID to the smartphone 400 and sends the posting acceptance screen to the application ID (reporter terminal) corresponding to the matter ID when the finished-sending code is received from the mail server device 200. Accordingly, the posting acceptance screen is displayed on the report notification app of the tablet terminal 300 (S820).

When the banner on the home screen of the smartphone 400 is tapped (S821), the report notification app is started (S822) so that the notification ID set to be linked in the banner is sent from the smartphone 400 to the application server device 500 along with the app ID. The application server device 500 authenticates the report receiver by the received app ID and notification ID, identifies the article ID associated with the received notification ID and reads out the article data from the database according to the identified article ID (S823) . The read-out article data is sent from the application server device 500 to the smartphone 400. The report notification app of the smartphone 400 creates a matter reporting page for the particular matter to be reported based on the received article data (S824) and displays the created matter reporting page (S825).

Even if, like the report notification system shown in Fig. 23 as described above, the posing for the matter to be reported by the report originator and the browsing of the page for the matter to be reported by the report receiver are performed via the application software exclusive to the report notification service, the same effect as that from the report notification system shown in Fig. 1 can be achieved. That is, since the notification ID for reading out the article data for the particular matter to be reported from the database is updated each time the article for the particular matter to be reported is posted and the updated notification ID is sent to the report receiver terminal which has been registered in advance, a third party other than the report receiver who handles the report receiver terminal corresponding to the app ID cannot know the notification ID. And so, the browsing of the page for the matter to be reported can be limited to only the report receiver who has been notified the updated notification ID. Since the user have only to tap the banner displayed on the home screen in order to browse the updated matter reporting page on the report notification app, burdensome tasks of inputting and managing an ID or password to browse the web page for which the browsing is limited can be eliminated. Even if the notification ID corresponding to the particular matter to be reported should be leaked out to be known to a third party, once the article for the matter to be reported corresponding to the notification ID is posted, the notification ID for reading out the article data associated with the matter to be reported is also updated, so the third party cannot browse the pre-update and post-update matter reporting pages using the notification ID that he has known. Therefore, with the server devices according to the present embodiment, it is difficult for the third party to keep browsing the update information for the matter reporting page, so the damage of personal information leakage due to the leaked notification ID can be limited.

Further, with the report notification system shown in Fig. 24, the notification ID includes an irregular and non-reproducible string and is changed each time a post for the matter to be reported is made, so it is quite difficult for the third party to identify the notification ID at a plurality of times. Accordingly, when the application server device 500 receives, at a plurality of times, the notification ID corresponding to the particular matter to be reported, which is repeatedly updated, from an app ID which is not registered in the app data management table (unregistered terminal), the app ID is quite likely to be the report receiver terminal which has received the reporting mail. Thus, when the application server device 500 receives, at a plurality of times, the notification ID (URL) for the particular matter to be reported which is changed each time a post is made, from a user which is not managed in the application server device 500, it may register the user as a contact address for the particular matter to be reported.

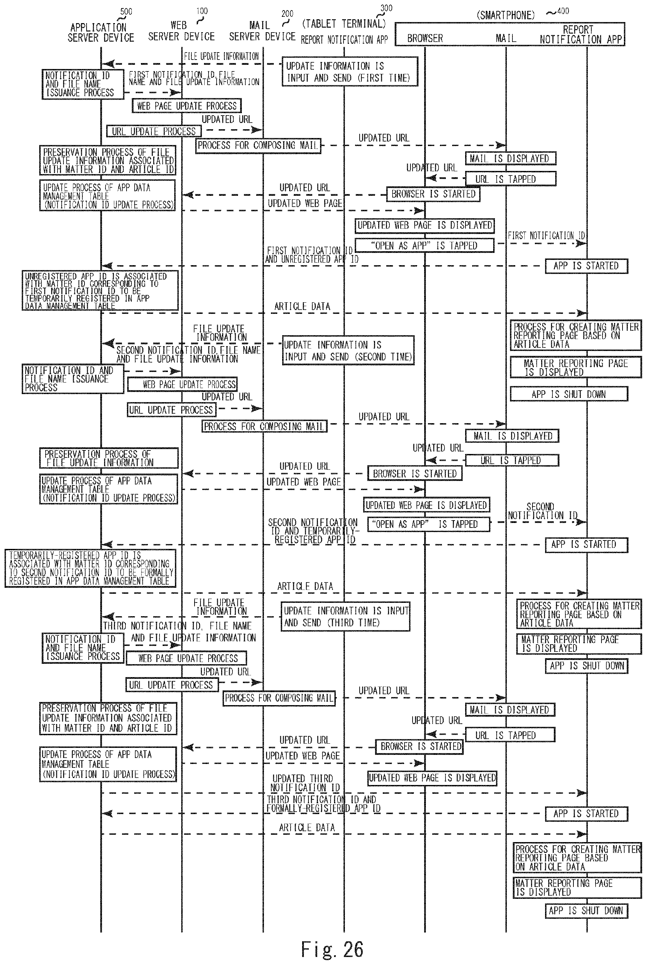

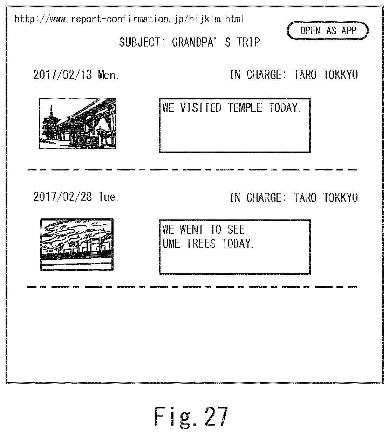

Fig. 26 is a sequence diagram illustrating a procedure of the app ID registration process with the report notification system in Fig. 23. Fig. 26 shows a case wherein the report notification process shown in Fig. 24 is performed three times repeatedly. As shown in Fig. 26, when a first post is made for the particular matter to be reported, the report receiver who receives the reporting mail can browse the web page corresponding to the particular matter to be reported as shown in Fig. 27 by tapping a URL described in the reporting mail. A code for automatically starting the report notification app and a first notification ID issued for the first post are associated with "open as app" in the web page shown in Fig. 27. When "open as app" is tapped by the report receiver, the report notification app is started and the first notification ID corresponding to the particular matter to be reported is sent from the smartphone 400 to the application sever device 500 along with a unique app ID for identifying the smartphone 400 (referred to as "particular app ID" in this case). In the case where the received particular app ID is not registered in the app data management table, the application server device 500 correlates the received particular app ID with the particular matter to be reported and temporarily registers the correlated ID in the app data management table. Besides, the application server device 500 sends, to the temporarily-registered particular app ID, an article data set for the particular matter to be reported corresponding to the received first notification ID. Accordingly, the report receiver can browse the reporting page for the particular matter to be reported on the screen of the report notification app of the smartphone 400.

When a second post for the particular matter to be reported is made, a second notification ID for the particular matter to be reported which is issued for the second post is, through the similar procedure as is the case for the first post, sent from the report notification app of the smartphone 400 to the application server device 500 along with the particular app ID. Since the received particular app ID is temporarily registered in the app data management table, the application server device 500 formally registers the received particular app ID which is temporarily registered. Besides, the application server device 500 sends, to the formally-registered particular app ID, an article data set for the particular matter to be reported corresponding to the received second notification ID. Accordingly, the report receiver can browse the reporting page for the particular matter to be reported on the screen of the report notification app of the smartphone 400. Thus, the application server device 500 does not send the notification ID to the particular app ID which is temporarily registered.

When a third post for the particular matter to be reported is made, the particular app ID has already been formally registered for the particular matter to be reported. Accordingly, the application server device 500 sends a third notification ID issued for the third post to the particular app ID. Thus, the report receiver can directly browse the reporting page for the particular matter to be reported via the report notification app of the smartphone 400 without a browser.

With the server devices according to the present embodiment described above, when the notification ID for the particular matter to be reported, which is updated each time a post for the matter to be reported is made, is received at a plurality of times continuously or intermittently from the same unregistered app ID (terminal), the received unregistered app ID is correlated with the particular matter to be reported and registered. Accordingly, since the app ID for the report receiver who wishes to browse on the report notification app can be automatically registered in the app data management table through the above-mentioned automatic app ID registration process, the report receiver's side has only to register a mail address of the report receiver for each matter to be reported at the initial registration stage, so the registration work for the app ID for each matter to be reported can be reduced.

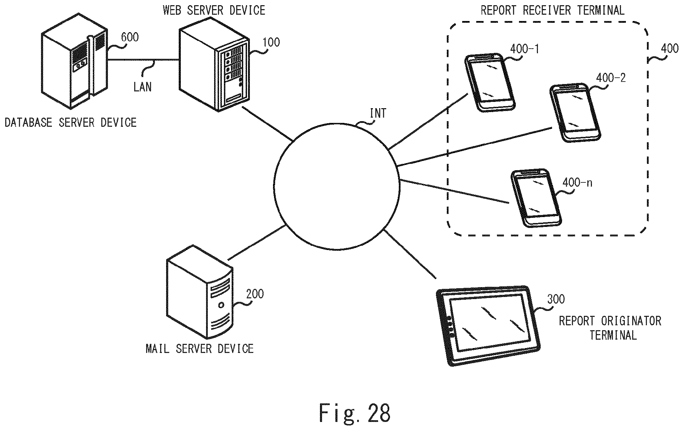

In the present embodiment, although a plurality of web page files each corresponding to a plurality of matters to be reported are stored in the web server device 100, the plurality of web page files may be stored in the external storage device electrically connected to the web server device 100. Fig. 28 is a system configuration diagram illustrating another example of the report notification system including the server devices according to the present embodiment. The report notification system shown in Fig. 28 has a configuration in which an external database server device 600 is connected to the web server device 100 via a network, which is typically a LAN, in the report notification system in Fig. 1. The database server device 600 stores the plurality of web page files associated with a plurality of matter IDs and URL information. It should be noted that although the functions are described as being distributed to the web server device 100 and the mail server device 200 herein, the functions of the web server device 100 and the functions of the mail server device 200 may be implemented on a single server device.

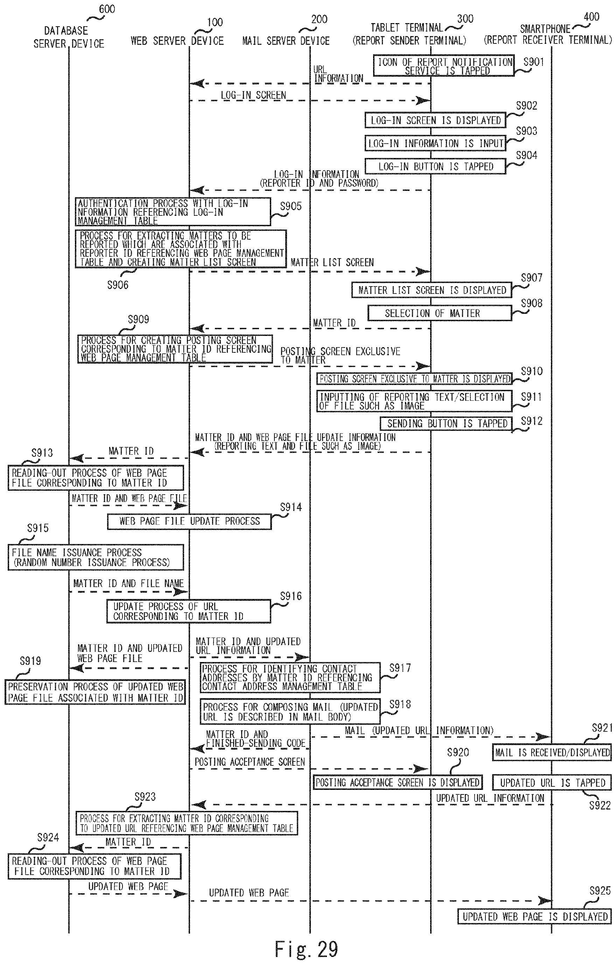

Fig. 29 is a sequence diagram illustrating an example of the procedure of the report notification process with the report notification system in Fig. 28. As shown in Fig. 29, the steps from when the icon corresponding to the report notification service displayed in the browser of the tablet terminal 300 is tapped by the report originator till when the contents of the report are input and the sending button is tapped on the posting screen for the particular matter to be reported displayed on the report sender terminal (S901∼S912) are the same as those in the procedure in Fig. 2(S101∼S112), so the explanation thereof is omitted.

When the sending button is tapped by the report originator (S912), the page file update information (a reporting text and a file such as an image) is sent from the tablet terminal 300 to the web server device 100 along with the matter ID. The web server device 100 retains the received page file update information along with the matter ID and sends the matter ID to the database server device 600 along with a request for reading out the web page file in order to read out the web page file corresponding to the matter ID from the database server device 600. The database server device 600 reads out the web page file corresponding to the received matter ID (S913) and sends the read-out web page file to the web server device 100 along with the matter ID. The web server device 100 updates the received web page file according to the page file update information (S914). The database server device 600 issues a new file name (random number) for the updated web page file after receiving the page file update information (S915) and sends the issued new file name to the web server device 100 along with the matter ID. The web server device 100 updates a URL for the updated web page file according to the new file name received from the database server device 600 (S916). The web server device 100 sends the updated web page file and the updated URL information to the database server device 600 along with the matter ID and a request for preserving the file. The database server device 600 preserves the updated web page file according to the updated URL information (S919). Further, the web server device 100 sends the updated URL information to the mail server device 200 along with the matter ID.

The mail server device 200 identifies a contact address corresponding to the received matter ID (S917) and composes a reporting mail that the updated URL information is inserted into a template of the mail body (S918). The mail server device 200 sends the composed reporting mail to the mail address identified in the step S917. Accordingly, the mail receipt screen shown in Fig. 7 is displayed on the smartphone 400 at which the reporting mail is received (S921). In addition, the mail server device 200 sends, to the web server device 100, along with the matter ID, the finished-sending code indicating that the reporting mail has been sent. The web server device 100 sends the posting acceptance screen to the reporter ID (report originator terminal 300) corresponding to the matter ID according to the receipt of the finished-sending code. Accordingly, the posting acceptance screen is displayed on the tablet terminal 300 on the report originator's side (S920) . When the updated URL on the mail receipt screen is tapped by the report receiver (S922), the updated URL information is sent from the smartphone 400 to the web server device 100. The web server device 100 sends the request for reading out the web page file corresponding to the updated URL to the database server device 600 along with the matter ID (S923). The database server device 600 reads out the web page file corresponding to the matter ID from a storage and sends it to the web server device 100 (S924). The updated web page is displayed on the smartphone 400 (S925).

As already explained, one of the features of the server devices according to the present embodiment is that each time the web page file is updated, the URL for the updated web page file is updated and the updated URL is sent to the report receiver. This feature ensures the security of the web page file. Accordingly, even if the external database server device 600 has the data accumulation function as explained in Fig. 28 and Fig. 29, the security can be achieved. Like this, it can be configured such that the web server device 100 controls the external device which has the web page update function, the file name issuance function and the URL update function instead of the web server device 100. For example, in the report notification system in Fig. 28, the process for updating the web page (S914) and the process for updating the URL for the updated web page (S916) may be performed by the external database server device 600. In this case, the web server device 100 sends a request for updating the web page file and a request for updating the URL for the updated web page file to the database server device 600 and receives the updated URL information from the database server device 600.

While some embodiments of the present invention have been described, these embodiments have been presented by way of example and are not intended to limit the scope of the invention. These embodiments may be embodied in other various forms and various omissions, substitutions and modifications thereof may be made without departing from the spirit of the invention. These embodiments and the modifications thereof shall fall within the scope and spirit of the invention as well as within the scope of the invention described in the appended claims and the equivalents thereof.

### REFERENCE SIGNS LIST

100...web server device; 200...mail server device; 300...report originator terminal (tablet terminal) ; 400...report receiver terminal (smartphone).

## Claims

1. A server device connected with a report originator terminal on a report originator's part and a report receiver terminal on a report receiver's part via a network, comprising:
a storage device for storing a web page file to be reported;
a means for receiving update information for the web page file from the report originator terminal;
a means for updating the web page file stored in the storage device according to the update information;
a means for updating a URL for the updated web page file; and
a means for sending information about the updated URL to the report receiver terminal.

2. The server device according to Claim 1, further comprising a means for issuing a new file name for the updated web page file, wherein the updated URL includes the new file name.

3. The server device according to Claim 1, further comprising a means for generating a random number, wherein the updated URL includes the random number.

4. The server device according to Claim 1, further comprising a means for composing a reporting mail wherein the information about the updated URL is described in a body thereof, wherein the composed reporting mail is sent to the report receiver terminal.

5. A server device connected with, via a network, a report originator terminal on a report originator's part, a report receiver terminal on a report receiver's part and a storage device for storing a web page file to be reported, comprising:
a means for receiving update information for the web page file from the report originator terminal;
a means for sending, to the storage device, the update information along with a request for updating the web page file and a request for updating a URL for the updated web page file; and
a means for sending information about the updated URL to the report receiver terminal.

6. A server device connected with a report originator terminal on a report originator's part and a report receiver terminal on a report receiver's part via a network, comprising:
a storage device for storing a web page file to be reported;
a means for receiving update information for the web page file from the report originator terminal;
a means for updating the web page file stored in the storage device according to the update information; and
a means for sending, to the report receiver terminal, information about a URL updated with the update of the web page file.

7. A server device connected with, via a network, a report originator terminal on a report originator's part, a report receiver terminal on a report receiver's part and a storage device for storing a web page file to be reported, comprising:
a means for receiving update information for the web page file from the report originator terminal;
a means for sending, to the storage device, the update information along with a request for updating the web page file; and
a means for sending, to the report receiver terminal, information about a URL updated with the update of the web page file.
